# EUROPEAN PATENT APPLICATION

(11) **EP 4 717 584 A1**
(43) Date of publication of application: **01.04.2026**
(21) Application number: 24202400.8
(22) Date of filing: 25.09.2024
(51) Int. Cl.: B64C 1/06, B64C 1/18, F16B 7/00, B64C 1/36

(54) **FIXATION ASSEMBLY, AND FIXATION ARRANGEMENT FOR FIXING A MOUNTING STRUCTURE TO A SUPPORT STRUCTURE, AS WELL AS VEHICLE COMPRISING SAME**

(71) Applicant: AIRBUS Operations GmbH, 21129 Hamburg (DE)
(72) Inventor: Bortolotti Rossini, Mayara, 21129 Hamburg (DE); Benthien, Hermann, 21129 Hamburg (DE)

(57) **Abstract**

A fixation assembly (60) and a fixation arrangement (10) for fixing a mounting structure (8) to a support structure (2) of a vehicle (1), in particular a fuselage of an aircraft, and a vehicle (1) are provided, the fixation assembly (60) comprising at least one fixation element (61) adapted for transferring operational loads (K) of the mounting structure (8) into the support structure (2), and at least one redundancy element (62) configured to transfer the operational loads (K) alternatively and/or additionally to the at least one fixation element (61).

## Description

### Technical Field

The present disclosure relates to the field of assembling large vehicles, such as aircrafts, comprising mounting structures which have to be fixed to support structures of the vehicles. In particular, the disclosure relates to a fixation assembly for fixing a mounting structure to a support structure of a vehicle, in particular a fuselage of an aircraft, to a fixation arrangement for fixing a mounting structure to a support structure, in particular for a vehicle, such as a fuselage of an aircraft, and to a vehicle.

### Technical Background

Methods for assembling large vehicles, such as aircrafts, comprising mounting structures which have to be fixed to support structures of the vehicles are known from the prior art. The vehicles, such as aircrafts, are commonly assembled in assembling shops or hangars. There, the mounting structures, such as floor grids, have to be attached to the support structure, such as a fuselage.

US 9 428 258 B2 refers to a holding device for in particular panel-shaped interior lining parts of a fuselage. The holding device has a configuration that is easy and simple to mount, each holding device includes a supporting device, which is used to anchor the holding device on a primary structure of the fuselage and comprises a joint; a connecting tube, which extends out of the supporting device and one end of which is attached to the joint; a mounting for an interior lining part, to which mounting the other, opposite end of the connecting tube to the one end is attached; and a lanyard, which is fastened to the supporting device and the mounting and extends through the connecting tube and the length of which is greater than the length of the connecting tube.

EP 2 117 923 B1, for example, relates to a lining for an aircraft. The lining separates an intermediate space from an interior space of the aircraft in a pressure-tight manner. The lining panels extend either substantially horizontally or are fastened approximately vertically on a lining framework formed by profiles for connection to the fuselage cell. According to the invention, at least one of the lining panels allows automatic pressure equalization between the interior space and the intermediate space in the event that the pressure in the interior space drops to something in the order of 0 hPa (known as "rapid decompression"). This pressure corresponds to the air pressure prevailing at an altitude above 10,000 m. For this purpose, mounts of the lining panels are provided with predetermined breaking points. The predetermined breaking points are formed in particular by plastic nuts, the thread of which tears away when a critical load-bearing capacity is exceeded.

During assembly and later operation of the vehicles, a main challenge is to prevent an introduction of parasitic moments by the mounting structure into the support structure. The mounting structure should be mechanically decoupled from the support structure in so far that the mounting structure does not determine the mechanical behaviour of the support structure. In other words, the mounting structure has to allow sufficient degrees of freedom for maintaining mechanical independence of the support structure.

Assembly methods, as known from the prior art, do not seem to fully satisfy requirements for particularly joining relatively large parts of vehicles, such as sections of the mounting structure to be introduced into and then fixed to the support structure. Commonly, during the join-up of the mounting structure and the support structure, both are moved in translational direction until taking up their final position where they are then being affixed to each other. During the assembly, respective manufacturing tolerances have to be considered and compensated for without introducing said parasitic moments.

Furthermore, in particular assemblies for aircraft, have to fulfil certain safety requirements in terms of stability and durability. For example, according to the prior art, such safety requirements can commonly be met by oversizing parts involved to a degree that crack formation is avoided or at least slowed down or limited such that so-called safe life for respective assemblies is achieved. Nevertheless, the oversizing can lead to weight and design issues which may be problematic for aircraft, in view of that adding any weight for meeting safety requirements may in turn decrease flight ranges and/or payload.

### Summary

It may thus be seen as an object to reduce built-in stresses during assembly of vehicles, such as parasitic moments, and to decrease the assembly time. In other words, it can be seen as an object, to provide an efficient and fast, while at the same time highly reliable as well as accurate assembly of vehicles. Furthermore, it may be seen as an object to provide failsafe mechanical connections that meet certain safety requirements without overly adding weight and/or complexity to mechanical structures of vehicles, in particular an aircraft.

These objects are at least partly achieved by the subject-matter of the independent claims.

According to an aspect, a fixation assembly for fixing a mounting structure to a support structure of a vehicle, in particular a fuselage of an aircraft, is provided, comprising at least one fixation element adapted for transferring operational loads of the mounting structure into the support structure, and at least one redundancy element configured to transfer the operational loads alternatively and/or additionally to the at least one fixation element.

According to an aspect, a fixation arrangement for fixing a mounting structure at a support structure of a vehicle, in particular a fuselage of an aircraft, is provided, comprising at least one corresponding fixation assembly.

According to an aspect, a vehicle, in particular an aircraft, with a support structure comprising a corresponding fixation arrangement is provided.

The at least one redundancy element can provide an alternative and/or additional load path allowing the transfer of loads of the mounting structure to the support structure. Thereby, the fixation assembly can be provided with a multi-load path design. A corresponding fail-safe concept can thus provide that, when a damage to the fixation assembly occurs, it will not necessarily lead to an alternative load path outside of a respective fixation assembly but can guarantee a direct load transfer in the same fixation assembly.

The fixation assembly can comprise a fixation glove and/or mounting rod or strut which may be configured to provide the fixation element and/or redundancy element. For example, the fixation glove may at least in part serve as a redundancy element for the mounting rod or strut which may at least in part serve as a fixation element. Alternatively, or additionally, a connecting member for connecting the mounting structure to the support structure may at least in part provide the redundancy element.

The proposed solution thus has the advantage over the prior art that in the event of any kind of failure or damage of the fixation assembly itself, connected structures will not be compromised. Furthermore, oversizing respective components involved in the fixation assembly to a degree that weight and design issues may occur, can be avoided. In other words, the proposed solution allows to provide comparatively lightweight failsafe mechanical structures.

Further developments can be derived from the dependent claims and from the following description. Features described with reference to devices and arrangements may be implemented as method steps, or vice versa. Therefore, the description provided in the context of the fixation assembly, fixation glove, fixation arrangement and/or vehicle applies in an analogous manner also to respective methods. In particular, the functions of the fixation assembly, fixation glove, fixation arrangement and/or vehicle and of their or its, respectively, components may be implemented as method steps of the methods and the method steps may be implemented as functions and/or elements of the fixation assembly, fixation glove, fixation arrangement and/or vehicle.

According to an embodiment of a fixation assembly, the at least one redundancy element is adapted to take up the operational loads independently of the at least one fixation element. The at least one redundancy element may provide and/or be a part of an independent structure providing at least one load path in addition to the load path provided by the at least one fixation element. This further helps in providing comparatively lightweight failsafe mechanical structures.

According to an embodiment of a fixation assembly, the operational loads include static loads and dynamic loads. Consequently, the at least one redundancy element may provide and/or be a part of an independent structure providing at least one load path enabling to fully take up static loads and dynamic loads in addition to the load path provided by the at least one fixation element. This further helps in providing comparatively lightweight failsafe mechanical structures.

According to an embodiment of a fixation assembly, the operational loads at least correspond to a limit load, preferably to an ultimate load, to be expected during operation of the vehicle. Thereby, the at least one redundancy element may provide and/or be a part of an independent structure providing at least one load path enabling to fully take up respective limit loads or even ultimate loads in addition to the load path provided by the at least one fixation element. This may further help in providing comparatively lightweight failsafe fully redundant mechanical structures.

According to an embodiment of a fixation assembly, the at least one redundancy element complements the at least one fixation element. In other words, the redundancy element and the fixation element may complement each other in the fixation assembly. Thereby, the fixation assembly can have an integrated compact design, further enabling to provide comparatively lightweight failsafe fully redundant mechanical structures.

According to an embodiment of a fixation assembly, the at least one fixation element and the respective at least one redundancy element at least sectionwise encompass and/or encapsulate each other. Thereby, the at least one fixation element and the respective at least one redundancy element may at least partly surround each other. This may further help to provide an integrated compact design, wherein on the one hand, the at least one redundancy element and the at least one fixation element can protect and support each other, while on the other hand, they may transfer the operational loads independently of each other, thus enabling to provide comparatively lightweight failsafe mechanical structures.

According to an embodiment of a fixation assembly, the at least one redundancy element has a collar portion at least sectionwise surrounding the at least one fixation element. The collar portion can at least section-wise complement the at least one fixation element. At least one additional load path can be provided by the collar portion. This may further help to provide an integrated compact design, wherein on the one hand, the at least one redundancy element and the at least one fixation element can protect and support each other, while on the other hand, they may transfer the operational loads independently of each other, thus enabling to provide comparatively lightweight failsafe mechanical structures.

According to an embodiment of a fixation assembly, the at least one redundancy element is configured to at least sectionwise receive the at least one fixation element and/or the mounting structure. The at least one fixation element and the at least one redundancy element can be configured to receive the mounting structure between them. Consequently, the mounting structure at least section-wise be securely held by both, the at least one fixation element and the at least one redundancy element. This may further help to provide an integrated compact design, wherein on the one hand, the at least one redundancy element and the at least one fixation element can protect and support each other, while on the other hand, they may transfer the operational loads independently of each other, thus enabling to provide comparatively lightweight failsafe mechanical structures.

According to an embodiment of a fixation assembly, a gap between the fixation element and the redundancy element is formed for receiving the mounting structure. In the gap, the at least one fixation element and the at least one redundancy element can receive the mounting structure between them. Providing the gap therefore helps in enabling the mounting structure to be at least section-wise be securely held by both, the at least one fixation element and the at least one redundancy element. This may additionally help to provide an integrated compact design, wherein on the one hand, the at least one redundancy element and the at least one fixation element can protect and support each other, while on the other hand, they may transfer the operational loads independently of each other, thus enabling to provide comparatively lightweight failsafe mechanical structures.

According to an alternative and/or additional solution, a fixation glove for fixing a mounting structure to a support structure of a vehicle, in particular a fuselage of an aircraft, is provided, the fixation glove having an arch-shaped fixing section bordering a receptacle portion for receiving a mounting head of a mounting strut to bear the mounting head while wedging it within a support slot of a support element of the support structure.

A fixation arrangement for fixing a mounting structure at a support structure of a vehicle, in particular a fuselage of an aircraft, is provided, comprising a corresponding fixation glove.

A vehicle, in particular an aircraft, with a support structure comprising a corresponding fixation arrangement is provided.

A method for fixing a mounting structure to a support structure, in particular for a vehicle, such as a fuselage of an aircraft, is provided, wherein a mounting head of a mounting strut of the mounting structure is being inserted into a support slot of a support element of the support structure in an insertion direction, and wherein a peripheral gap around the mounting head is being at least partially closed by inserting a fixation glove having an arch-shaped fixing section bordering a receptacle portion for receiving the mounting head in and/or against the insertion direction, while the fixing section bears the mounting head while wedging it within the support slot.

The fixation glove may be placed between mounting head and the support element into a slit provided by the mounting slot for bearing and at the same time wedging the mounting head in a respective mounting position of the mounting head with respect to the support element. Thereby, the fixation glove may help to fix the mounting head at the support element in a desired position by being introduced between them without the necessity of applying cumbersome mounting procedures, such as using threaded elements would have to be adjusted and fixed to each other by respective rotational movements. Furthermore, the fixation glove may help to compensate manufacturing tolerances of and between the mounting head and the support element.

The proposed solution thus provides an innovative assembly procedure to achieve gap-free and stress-free assembly of apparatus sections, in particular when joining the mounting structures of the support structures. The solution can be particularly advantageous for joining floor grids and aircraft fuselages together. This is especially the case if the floor grids and fuselages have relatively large dimensions.

According to an embodiment of the fixation glove, the fixing section is arch-shaped in a projection along an insertion direction for inserting the fixation glove into a free space formed between the mounting head and the support slot. The arch-shaped shape of the fixing section allows for a rotation around an imaginary longitudinal axis of the fixation glove in the form of the sliding movement to enable a certain displacement along the arch in a manner such that the fixation glove may allow for relative rotational micro-movements between the mounting structure and the support structure. This helps in further mechanically decoupling the mounting structure from the support structure. Furthermore, the fixation glove can be easily inserted between the mounting structure and the support structure in the insertion direction which essentially extends in parallel to the longitudinal axis, thereby facilitating the assembly.

According to an embodiment of the fixation glove, wherein the fixing section provides an at least partially upward concave shaped outer bearing surface. The upward concave shaped outer bearing surface may also facilitate relative rotational micro-movements between the mounting structure and the support structure. This may further help in mechanically decoupling the mounting structure from the support structure, and to compensate for manufacturing tolerances.

According to an embodiment of the fixation glove, the receptacle portion is bordered by at least one wedge section opposing the fixing section with respect to a receiving space provided by the receptacle portion for receiving the mounting head. The at least one wedge section may help to wedge the fixation glove between the mounting structure and the supporting structure. By opposing the fixing section, the wedge section may help to push the fixing section against the interior surface of the support slot facing the fixation glove in a mounted position and/or fixation position while the mounting head may be held within the receiving space provided by the receptacle portion of the fixation glove.

According to an embodiment of the fixation glove, the receptacle portion comprises two wedge sections opposing the fixing section with respect to the receiving space and providing a notch between them for receiving a neck portion of the mounting strut holding the mounting head. By providing two wedge sections, respective wedging forces acting on the fixing section may be equally distributed along the bearing surface thereof. At the same time, the mounting may enter the receptacle portion while the neck of the mounting head sits within the notch. This allows for further facilitating assembly while at the same time helping to distribute forces without undue stresses or parasitic moments.

According to an embodiment of the fixation glove, the fixing section and at least one wedge section are extending essentially in parallel to each other with a common curvature. The common curvature further facilitates a rotation around an imaginary longitudinal axis of a fixation glove such that the fixation glove may allow for relative rotational micro-movements between the mounting structure and the support structure. This again helps in mechanically decoupling the mounting structure from the support structure.

According to an embodiment of the fixation glove, the fixation glove further has side walls extending essentially perpendicularly away from the fixing section and laterally bordering the receptacle portion. The sidewalls may help to limit lateral and/or rotational movements of the mounting head within the support slot. Furthermore, the sidewalls may help in increasing stability of the fixation glove.

According to an embodiment of the fixation glove, the side walls provide at least partially laterally outward convex shaped side faces. Such side faces can help in allowing rotational movements of the mounting strut with respect to the rotational element around a height axis of the fixation glove such that the fixation glove may allow for relative rotational micro-movements between the mounting structure and the support structure. This again helps in mechanically decoupling the mounting structure from the support structure.

According to an embodiment of the fixation glove, the fixing section and/or the side walls are provided with at least one groove for receiving a locking element for locking-up the mounting head within the receptacle portion. The groove and the locking element provide a tongue and groove connection for securing the fixation glove in a mounted position and/or fixation position. The locking element may be provided as a blade-shaped locking spring to be slid into grooves formed at two wide walls opposing each other at the receptacle portion. Thus, the locking element may be used to lock the fixation glove in a fixing position between the mounting structure and support structure in a final state.

According to an embodiment of the fixation glove, the receptacle portion provides a cavity for receiving the mounting head. The mounting head may thus be accommodated within the fixation glove. This helps in further enhancing bearing effect of the fixation glove surrounding the mounting head. Thus, certain micro-movements between the mounting structure and the support structure may be allowed while at the same time fixing the mounting structure to the support structure in a safe and secure manner.

According to an embodiment of the fixation arrangement, the fixation arrangement further comprises a mounting strut with a mounting head having a supporting surface shaped complementary at least to an inner bearing surface of the arch-shaped fixing section of the fixation glove. The mounting strut may be joined with the support structure by introducing the fixation glove, in particular the bearing surface thereof, between the mounting head and the support element. This helps for providing an easy and quick, yet safe and secure fixation of the mounting structure at the support structure, while the bearing surface may take up loads exerted by the mounting structure onto the support structure.

According to an embodiment of the fixation arrangement, the fixation arrangement further comprises a support strut with a support element having a support slot shaped complementary at least to an outer bearing surface of the arch-shaped fixing section of the fixation glove. The mounting head, the support slot and the fixation glove may be shaped complementary to each other such that the mounting head may be received in the receptacle portion which in turn may be received in the support slot. The support slot may be provided essentially with the shape of a T-Slot in a projection along an insertion direction of the fixation arrangement. Thus, the elements involved in the fixation arrangement may complement each other to provide a safe way of fixing the mounting structure to the support structure, while at the same time allowing for micro-movements of the mounting head within the support slot for compensating manufacturing tolerances and avoiding any introduction of undue stresses or parasitic moments by the mounting structure into the support structure.

According to an aspect, a support element for fixing a mounting structure at a support structure of a vehicle, in particular a fuselage of an aircraft, is provided, comprising an arch-shaped support slot for receiving a mounting head of a mounting element in a mounted position.

A fixation arrangement for fixing a mounting structure at a support structure of a vehicle, in particular a fuselage of an aircraft, may be provided, comprising a mounting rod with at least one arch-shaped mounting head, and a corresponding support element.

A method for fixing a mounting structure, at a support structure, in particular for a vehicle, such as a fuselage of an aircraft, may be provided, wherein a mounting head of a mounting strut of the mounting structure is being inserted into a support slot of a support element of the support structure in an insertion direction. Alternatively, or additionally, the support element may be provided as a press formed part, for example integrally formed in the mounting structure and/or the support structure and provide integrated rotary interfaces, such as by respective mounting, support and/or bearing surfaces. As another alternative or additional embodiment, a peripheral gap around the mounting head may be at least partially closed by inserting a fixation glove having an arch-shaped fixing section bordering a receptacle portion for receiving the mounting head in and/or against the insertion direction. The fixing section may bear the mounting head while wedging it within the support slot.

According to an embodiment of the support element, the support slot is at least partly shaped complementary to the mounting head. Thereby, a positive fit can be provided between the support element and the mounting element. The complementary shape can help to provide an accurate, yet tolerance compensating connection.

According to an embodiment of the support element, the support slot is integrally formed within the support element. The support slot can be integrally formed as one piece, such as by moulding and/or press forming. Thereby, the support element may be provided in a simple manner.

According to an embodiment of the support element, the support slot is formed as a hollow space within the support element. The support element may be moulded and/or formed around the mounting head. Thereby, the support element and the mounting element, or at least the mounting head thereof, may be provided as an integral part.

According to an embodiment of the support element, the support slot intersects with a through-hole for letting a mounting rod attached to the mounting head of the mounting element enter the support slot while the mounting head is received in the support slot. Alternatively, or additionally, a notch may be formed at the support element, such that the mounting strut and/or a neck portion thereof may enter the support element. Thereby, the mounting head can be firmly held within the support slot while the mounting strut may extend towards the outside of the support element to connect to the mounting structure.

According to an embodiment of the support element, the support element at least partly has a cylindrically shaped outer contour. Alternatively, or additionally, the support element may have a spherically shaped outer contour. In having a cylindrical and/or spherical outer contour, the support element may enable rotating movements. This further helps in providing certain degrees of freedom for mechanically decoupling the mounting structure from the support structure in such a way that introducing undue stresses and/or parasitic moments into the support structure by the mounting structure is prevented.

According to an embodiment of the support element, the through-hole is arranged in the region of an apex of the support element. The through-hole can be arranged in the region of an apex of the cylindrically and/or spherically shaped outer contour. Thereby, the cylindrically and/or spherically shaped outer contour may be provided with a maximum degree of rotate ability with respect to the support structure and/or the mounting structure, respectively, since the mounting strut can exit the through-hole in the region of the apex thus potentially not hindering rotational movements of the support element.

According to an embodiment of the support element, the support element is configured as a joint member of a rotary joint. For example, the support element may be configured as part of a ball joint. The mounting structure and/or support structure may provide respective coupling devices, which may comprise support bases and/or bearing seats for enabling the support element to function as a joint member of a rotary joint. This further helps in providing the desired degrees of freedom in the connection between the mounting structure and the support structure.

According to an embodiment of the fixation arrangement, the at least one mounting head is surrounded by the support slot. In other words, the mounting head may be embedded within the support slot. This helps in using respective supporting and/or holding surfaces formed at the mounting head to tightly support and/or firmly hold, respectively, the mounting head in the support slot. Thereby, undo relative movements between the mounting head and the support slot can be prevented.

According to an embodiment of the fixation arrangement, a peripheral gap between the mounting head and the support slot is at least partially closed by means of a fixation glove. The fixation glove may help to firmly fix the mounting head and the support slot. Furthermore, the fixation glove may help to compensate any tolerances between the mounting head and the support slot.

### Brief Description of the Drawings

The subject matter will hereinafter be described in conjunction with the following drawing figures, wherein like numerals denote like elements, and wherein:
Fig. 1 is a schematic side view of a vehicle in the form of an aircraft comprising a fuselage having several sections joined together.
Fig. 2 is a schematic perspective side view of two sections of the vehicle arranged at a distance from each other to be joined together.
Fig. 3 is a schematic representation of details of the two sections of the vehicle arranged at a distance from each other, both comprising a support structure and a mounting structure.
Fig. 4 is a schematic perspective view of a fixation arrangement comprising a support strut of the support structure, a mounting strut of the mounting structure, and a fixation glove for fixing the mounting structure to the support structure.
Fig. 5 is a schematic perspective view of the fixation arrangement 10 shown in Fig. 4 with the support strut and the mounting strut in a joined position, while the fixation glove is ready to be inserted between the support strut and the mounting strut in an insertion direction.
Fig. 6 is a schematic rear view of the fixation arrangement shown in Figs. 4 and 5 in a fixed state with the support strut and the mounting strut in the joined position and the fixation glove in a fixation position.
Fig. 7 is a schematic perspective front view of the fixation arrangement in the mounted state with the fixation glove in the fixation position and locking elements in respective locking positions.
Fig. 8 is a schematic cross-sectional top view of the fixation arrangement with the mounting strut and the support strut in the joined position along a cross-sectional line A-A depicted in Fig. 5.
Fig. 9 is a schematic cross-sectional top view of the fixation arrangement in the final state along a cross-sectional line B-B depicted in Fig. 6.
Fig. 10 is a schematic rear view of the fixation arrangement with the support strut and the mounting strut in the joined position.
Fig. 11 is a schematic rear view of the fixation arrangement in the mounted state.
Fig. 12 is a schematic cross-sectional side view of the fixation arrangement in the mounted state along a cross-sectional line C-C depicted in Fig. 11.
Fig. 13 is a schematic cross-sectional side view of another embodiment of the fixation arrangement fixing a mounting structure to a support structure.
Fig. 14 is a schematic cross-sectional side view of the fixation arrangement shown Fig. 12 fixing another embodiment of a mounting structure to another embodiment of a support structure.
Fig. 15 is a schematic cross-sectional side view of the fixation arrangement shown Figs. 13 and 14.
Fig. 16 is a schematic cross-sectional side view of an embodiment of a fixation arrangement comprising a fixation assembly for fixing a mounting structure to a support structure.
Fig. 17 is a schematic cross-sectional side view of a further embodiment of a fixation arrangement comprising a fixation assembly for fixing a mounting structure to a support structure.
Fig. 18 is a schematic cross-sectional side view of another embodiment of a fixation arrangement comprising a fixation assembly for fixing a mounting structure to a support structure and transferring operational loads along a first load path.
Fig. 19 is a schematic cross-sectional side view of the embodiment of a fixation arrangement shown in Fig. 18 transferring operational loads along a further load path.
Fig. 20 is a schematic front view of a fixation arrangement comprising a further embodiment of a fixation assembly in the mounted state.
Fig. 21 is a schematic cross-sectional side view of the fixation arrangement in the mounted state along a cross-sectional line C-C depicted in Fig. 20.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

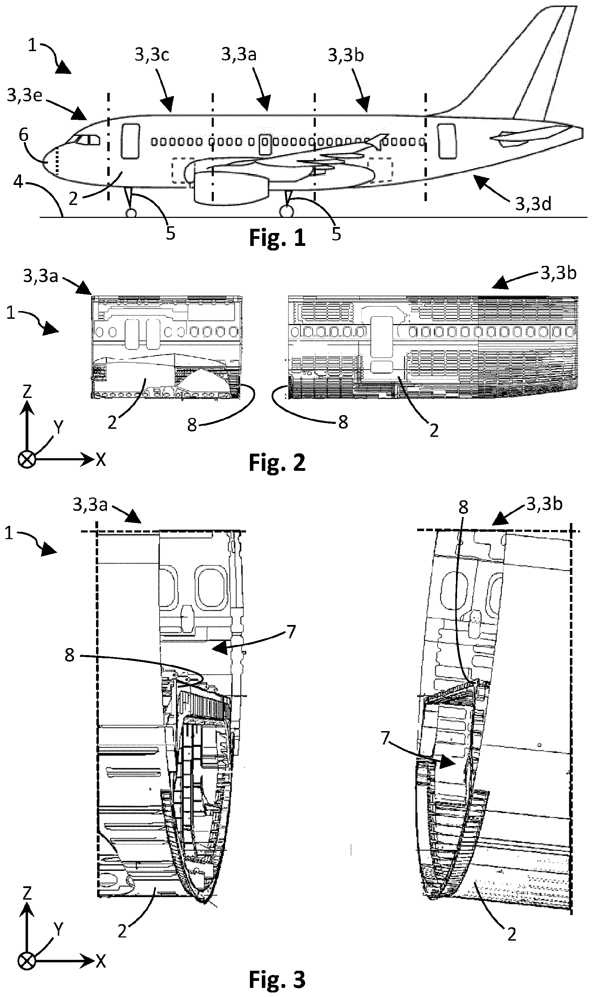

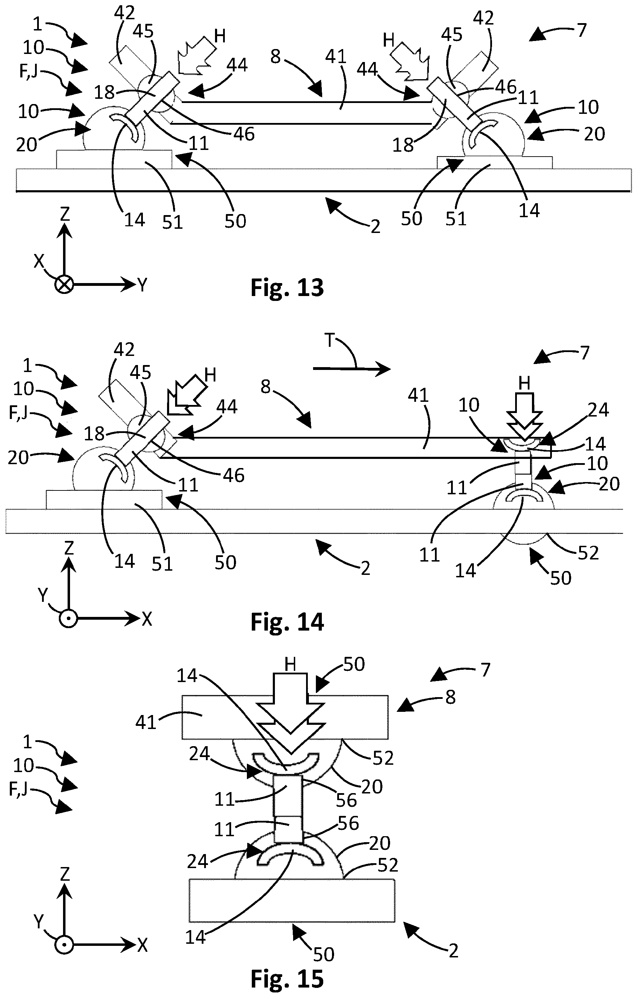

Fig. 1 shows a schematic side view of a vehicle 1, for example, in the form of an aircraft comprising a support structure 2 in the form of a fuselage having several support structure sections 3, joined together. For example, the support structure sections 3 comprise a first section 3a, a second section 3b, a third section 3c, a fourth section 3d, and/or a fifth section 3e. The first section 3a may be a centre section of the support structure 2. The second section 3b may be an after section of the support structure 2. The third section 3c may be a front section of the support structure 2. The fourth section 3d may be a tail section of the support structure 2. The fifth section 3e may be a nose section of the support structure 2. The support structure 2 may rest on a ground 4 by means of a landing gear 5 and may be further provided with a cover 6, for example for covering an interior space 7 (see Figs. 3 and 13) for accommodating a radar antenna (not shown) mounted to the support structure 2.

Fig. 2 shows a schematic side view of two of the support structure sections 3, namely, for example, the first section 3a and the second section 3b of the support structure 2 of the vehicle 1 arranged at a distance from each other to be joined together. As can be seen in Fig. 3, the support structure 2 may provide an interior space 7 receiving a mounting structure 8, for example, a frame for mounting installations at the support structure 2. The vehicle 1 and thus, the support structure 2, extend in a longitudinal direction X, a transverse direction Y, and a height direction Z, together forming a Cartesian coordinate system.

Fig. 3 is a schematic representation of details of the two sections 3a, 3b of the vehicle arranged at a distance from each other, both comprising the support structure 2 and a mounting structure 8. The mounting structure 8 may be accommodated within the interior space 7 provided by the support structure 2. Before joining the two sections 3a, 3b, the mounting structure 8 may be mated with the support structure 2, for example, by performing a translational movement essentially in parallel to the longitudinal direction X for inserting the mounting structure 8 into the interior space 7 of the two sections 3a, 3b, and then fixing the mounting structure 8 in a pre-defined position.

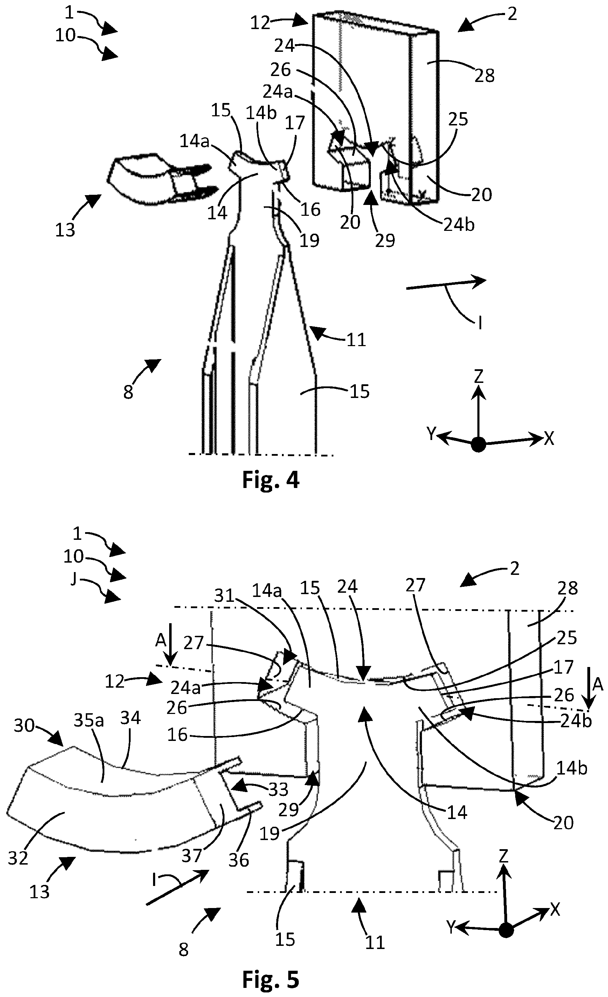

Fig. 4 shows a schematic perspective view of a fixation arrangement 10 comprising a mounting strut 11 of the mounting structure 8, a support strut 12 of the support structure 2, and a fixation glove 13 for fixing the mounting structure 8 to the support structure 2. The mounting strut 11 is provided with a mounting head 14 which has two mounting arms 14a, 14b providing a support surface 15, holding surfaces 16 and side surfaces 17 extending along peripheral side faces of two mounting arms 14a, 14b which are to a beam portion 18 of the mounting strut 11 via a neck portion 19 thereof.

The support strut 12 is provided with a support element 20 having a support slot 24 accommodating the mounting head 14. Therefore, the support slot 24 may be shaped such that it provides two supporting arms 24a, 24b providing peripheral side faces along which a bearing surface 25, retention surfaces 26 and lateral surfaces 27 are extending. The support element 20 providing the support slot 24 can be formed in a support pole 28. The support slot 24 can open through a notch 29 for accommodating the neck portion 19 of the mounting head 14 which can be inserted into the support slot 24 along an insertion direction I which may be extending essentially in parallel to the longitudinal direction X.

Fig. 5 is a schematic perspective view of the fixation arrangement 10 shown in Fig. 4 with the mounting strut 11 and the support strut 12 and in a joined position J, while the fixation glove 13 is ready to be inserted between the mounting strut 11 and the support strut 12 in the insertion direction I. In the mounted position J or joined state, the mounting strut 11 and the support strut 12 are joined such that the mounting head 14 sits within the support slot 24. The mounting arms 14a, 14b of the mounting head 14 are located in the supporting arms 24a, 24b of the support slot 24. The support surface 15 faces towards the bearing surface 25. The holding surfaces 16 face the retention surfaces 26. The side surfaces 17 face the lateral surfaces 27.

The fixation glove 13 has a receptacle portion 30 which is configured to be inserted into a gap 31 formed peripherally around the mounting head 14 between the mounting head 14 and the support slot 24. The fixation glove 13 has a back wall 32 closing up a cavity 33 formed in the receptacle portion 34 for receiving the mounting head 14. The back wall 32 is connected to the fixing section 34 providing an outer bearing surface 35a and adapted to be inserted between the bearing surface 25 of the support slot 24 and the support surface 15 of the mounting head 14. Wedge sections 36 of the fixation glove 13 are formed at the receptacle portion 30 and oppose the fixing section 34 with respect to the cavity 33. Side walls 37 of the receptacle portion 34 laterally border the cavity 33.

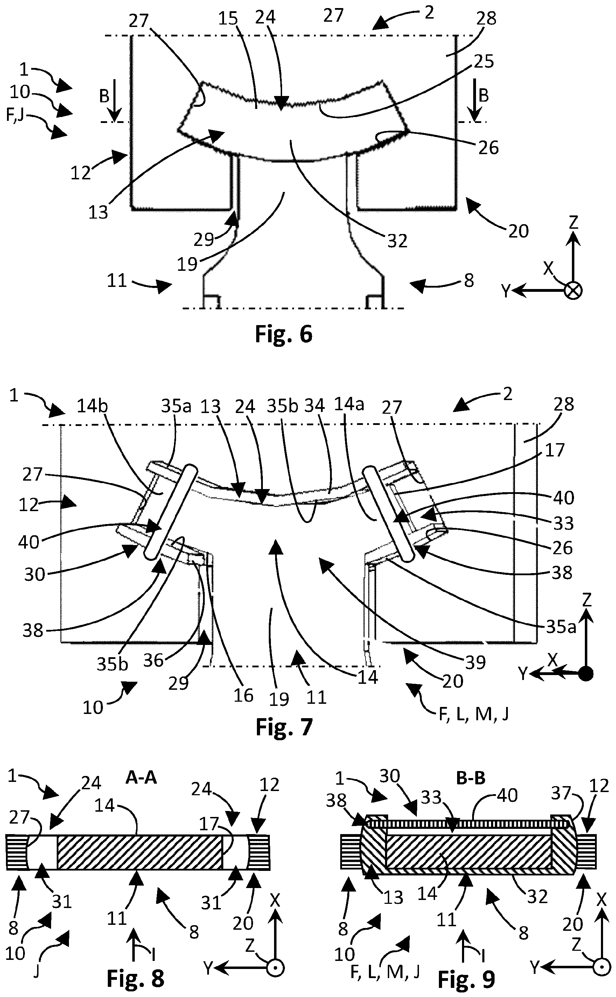

Fig. 6 shows a schematic rear view of the fixation arrangement shown in Figs. 4 and 5 in a fixed state with the support strut 12 and the mounting strut 11 in the mounted position J and the fixation glove in a fixation position F. The receptacle portion 30 of the fixation glove 13 accommodates the mounting head 14. The gap 31 around the mounting head 14 is closed by the fixing section 34, the wedge sections 36, and the side walls 37 holding the mounting head 14 firmly in the mounted position J in the support slot 24.

Fig. 7 shows a schematic perspective front view of the fixation arrangement 10 in the final or mounted state M with the fixation glove 13 in the fixation position F and locking elements 40 respective locking positions. Here it becomes apparent that the fixation glove 13 may further comprise grooves 38 and an opening 39. Locking elements 40, for example, in the form of locking springs, may be held in the grooves 38 which can be formed in the fixing section 34 and the wedge section 36 in such a manner that the locking elements 40 traverse the fixing section 34 and thus the support slot 24 to prevent movements of the fixation glove 13 in a direction running opposite to the insertion direction I and hence, lock the fixation glove 13 in the fixation position F. Consequently, the fixation arrangement 10 is in a final or fully mounted state M.

Furthermore, it becomes apparent in Fig. 7 that the wedge sections 36 of the fixation glove 13 provide outer bearing surfaces 35b and inner support surfaces 35b as well for bearing the retention surface 26 of the support element 20 and supporting the holding surface 16 of the mounting head 14, respectively. The neck portion 19 of the mounting strut 11 juts through the opening 39 of the fixation glove 13. The receptacle portion 30, or at least front edges thereof, jut through the support slot 24 and beyond the mounting head 14 in the insertion direction I such that the locking elements 40 may be attached to the receptacle portion 34 retaining the fixation glove 13 in the mounted state M.

Fig. 8 shows a schematic cross-sectional top view of the fixation arrangement 10 with the mounting strut 11 and the support strut 12 in the joined position J along a cross-sectional line A-A depicted in Fig. 5. The mounting head 14 sets in the mounting slot 24 while leaving the gap 31 in the region of the lateral surfaces 27. In other words, there is a free space between the lateral surfaces 17 of the mounting head 14 and the lateral surfaces 27 of the support element 20. The lateral surfaces 27 can have a curved shape, such as an inner concave shape, as illustrated in Fig. 27 which thus provides a rounded bearing surface for the sidewall 37 of the fixation glove 13.

Fig. 9 shows a schematic cross-sectional top view of the fixation arrangement 10 in the final or mounted state M along a cross-sectional line B-B depicted in Fig. 6. Here it becomes apparent that the outer surfaces of the side walls 37 of the fixation glove 13 may have outer convex shape essentially matching the inner concave shape of the lateral surfaces 27 of the support element 12 such that slight rotational movements of the mounting strut 11, in particular the mounting head 14 within the receptacle portion 30 of the fixation glove 13, may occur around the longitudinal axis Z with respect to the support strut 12. Furthermore, in the exemplary embodiment shown in Fig. 9, the grooves 38 are formed in the side walls 37 of the fixation glove 13, such that the locking element 40 can traverse the receptacle portion 30 direction essentially in parallel to the traverse direction Y and thus lock the mounting head 14 within the cavity 33. Consequently, the mounting head 14 is enclosed by the back wall 32, sidewalls 37 and locking element 40 in a projection along the height direction Z.

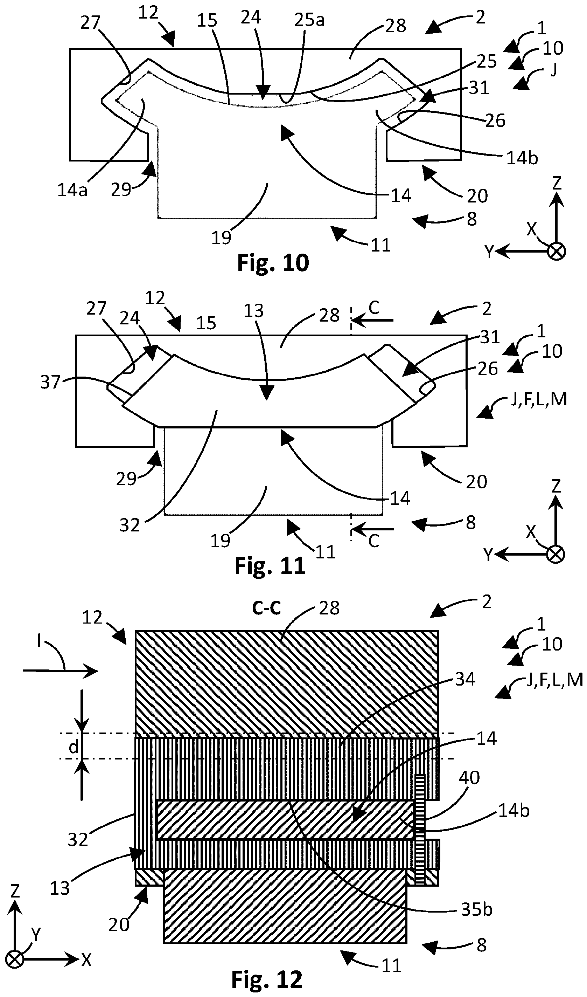

Fig. 10 shows a schematic rear view of the fixation arrangement 10 with the mounting strut 11 and the support strut 12 in the joined position J. Here it becomes apparent that the peripheral gap 31 around the mounting head 14 may provide a certain clearance in the transverse direction Y and the height direction Z. A plateau 25a can be provided at the bearing surface 25 of the support element 20 within the support slot 24. It may help to add a certain elasticity to the fixation arrangement 10 in that in particular outer sections of the support surface 15 provided by the mounting arms 14a, 14b rest on the bearing surface 25 while a certain clearance remains between the support surface 15 and the bearing surface 25 in the region of the plateau 25a.

Fig. 11 shows a schematic rear view of the fixation arrangement 10 in the final or mounted state M. Here it becomes apparent that a respective gap 31 may remain in the region of the lateral surface 27 of the support slot 24 and the sidewall 37 of the fixation glove 13. This lateral clearance can provide for certain tolerance compensation and allow for micro-rotations around the longitudinal axis X.

Fig. 12 shows a schematic cross-sectional side view of the fixation arrangement 10 in the final or mounted state M along a cross-sectional line C-C depicted in Fig. 11. Here it becomes apparent, that a certain thickness or tolerance d of the fixing section 34 measured in parallel to the height direction Z can provide for tolerance compensation by means of the fixation glove 13. For example, the thickness d may be varied such that different types of fixation gloves 13 with different thicknesses d can be used for closing different gaps 31 with varying sizes 31. Hence, the different thicknesses d help in adjusting variations in measurements of the support structure to and the mounting structure 8, in particular if occurring in the longitudinal direction Z at the support struts 12 and the mounting strut 11, respectively.

Fig. 13 shows a schematic cross-sectional side view of another embodiment of the fixation arrangement 10 fixing a mounting structure 8 to a support structure 2. Here, on the side of the mounting structure 8, a mounting base 41, such as a plate for holding a radar antenna (not shown), arranged within the interior space 7, may be provided with slanted mounting sections 42 each provided with at least one attachment device 44. The mounting strut 11, in particular the beam portion 18 thereof, may be received in a mounting member 45. The mounting member 45 may provide a through-hole 46 for receiving the beam portion 18.

For example, the mounting member 45 may be provided in the form of a barrel nut and the through-hole 46 may be provided in the form of a threaded shaft. If then, the beam portion 18 is provided in the form of a threaded bolt, a positive fit connection can be provided between the mounting member 45 and the mounting strut 11. In providing a threaded connection between the beam portion 18 and the through-hole 46, the mounting structure 8 can be adjustable in height direction Z in relation to the support structure 2. The mounting member 45 itself may be received in the mounting section 42 of the mounting base 41 in a positive-fit manner as well.

The mounting head 14 may be received in the support element 20 which may have a spherical and/or cylindrical shape. The support element 20 can be part of a coupling device 50 which may comprise spherical and/or cylindrical connectors and snap connectors (not shown) which may be received at a support base 51 of the coupling device 50.

Fig. 14 shows a schematic cross-sectional side of the fixation arrangement 10 shown Fig. 12 fixing another embodiment of a mounting structure 8 to another embodiment of a support structure 2. Here, the slanted mounting section 42 may be arranged at an angle of 45° with respect to the mounting base 41 and/or the support structure 2, for example, such that it can take up acceleration forces acting upon the mounting structure 8 essentially in a direction parallel to a travel direction T of the vehicle 1. Hence, the fixation arrangement 10 with the coupling device 50 connected to the slanted mounting section 42 via the mounting strut 11 may serve as a locating bearing for taking up acceleration forces. In other words, the mounting strut 11 may extend under the respective angle of, e.g., 45°, as well for supporting the mounting structure 8 at the support structure to in directions opposite to the longitudinal direction X and the height direction Z.

The other fixation arrangement 10 shown in figure 14 may be arranged such that the mounting strut 11 extends essentially in parallel to the height direction. Here, the mounting strut 11 may be provided as to mounting struts 11 of which one act as a shaft and the other as a cylinder taking up the shaft. For example, the upper mounting strut 11 may be provided as a hollow threaded cylinder taking up the lower mounting strut 11 provided as a threaded shaft or a bolt screwed into the cylinder such that the height adjustment of the mounting structure 8 with respect to the support structure to essentially in parallel to the height direction Z is possible. The mounting head 14 of the upper mounting strut 11 can be received in a support slot 24 formed directly in the mounting base 41. The support element 20, for example provided in the form of a ball or sphere may be received in a coupling device 50 providing a bearing seat 52. The support element 20 may at least to a certain extent rotate in the bearing seat 52, like a ball joint. Hence, the fixation arrangement 10 with the coupling device 50 sitting in the bearing seat 52 may serve as a locating and/or floating bearing for taking up mainly forces acting in parallel to the height direction Z.

Fig. 15 shows a schematic cross-sectional side of the fixation arrangement shown Figs. 13 and 14. Becomes apparent that the support slots 24 can be integrated into the support elements 20. The mounting head 40 can be received at the support slots 24 in a manner as described above. The support elements 20 can be integrally formed around the mounting head 14. Bearing seats 52 of coupling devices 50 receiving support elements 20 may be formed directly at the support structure 2 and/or mounting structure 8 for connecting the mounting strut 11 through the support structure to and/or the mounting structure 8, respectively. Furthermore, a through-hole 56 may be formed in the support element 20 and intersect with the support slot 24 such that the mounting strut 11 may enter the support element 20.

Height adjustments H, for example, for tolerance compensation, coarse adjustments, and/or fine adjustments of a certain distance between the support structure 2 and the mounting structure 8 may be achieved in that mounting strut 11, mounting members 45, and/or through-holes 46 are provided with respective adjustment means, such as threats, or alike. The adjustments may be made in any of the longitudinal direction X, transverse direction Y, and/or height direction Z by arranging the respective adjustment means in a way desired or required by a certain application of the fixation arrangement 10. The attachment device 44 as well as the coupling device 50 with the connectors and the snap connectors (not shown) of the fixation arrangement 10 can be connected to each other as described in European Patent Application No. 22214474.3 with the title "Structure system for installation into a fuselage structure" which is incorporated herein by reference.

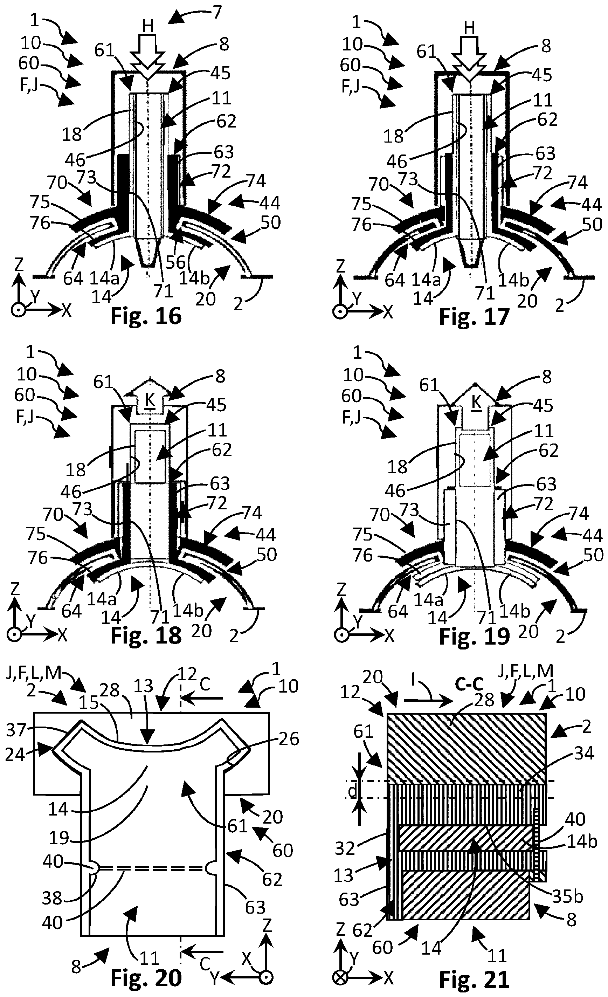

Fig. 16 shows a schematic cross-sectional side view of an embodiment of a fixation arrangement 10 comprising a fixation assembly 60 for fixing a mounting structure 8 to a support structure 2. The fixation assembly 60 comprises a fixation element 61 and a redundancy element 62. The fixation element 61 can comprise the mounting strut 11 and the mounting member 46. Additionally, the fixation element 61 can provide at least one of the mounting arms 14a, 14b.

The redundancy element 62 can comprise a collar portion 63 at least partially enclosing the fixation element 61, in particular the beam portion 18 of the mounting strut 11. The mounting strut 11, in particular the beam portion 18 thereof, may be received in the mounting member 45. The mounting member 45 may provide a through-hole 46 for receiving the beam portion 18.

Furthermore, the redundancy element 62 may at least partly provide a gap 64, which in a similar manner as the gap 31 and/or the support slot 24, as described above, can take up the coupling device 50 formed at the support element 20 connected to the support structure 2. The mounting strut 11, in particular the beam portion 18 thereof, may be received in the mounting member 45. The mounting member 45 may provide the through-hole 46 for receiving the beam portion 18.

In the present example, the redundancy element 62 is provided as a connecting member 70 with a through-hole 71 configured for receiving mounting member 46 holding the mounting strut 11. The through-hole 71 may at least section-wise extend through a shaft portion 72 of the connecting member 70. The shaft portion 72 may at least partially provide the collar portion 63 and may have an outer circumference 73 which can be at least partially enclosed by the mounting structure 8.

The connecting member 70 may further comprise a head portion 74. In the present invention, the head portion 74 is integrally formed with the shaft portion 72. The gap 64 may at least partially formed in the head portion 74. Therefore, the head portion 74 may provide at least one upper arm 75 and at least one lower arm 76 which can at least partially form the gap 64 between them.

For example, the mounting member 45 may be provided in the form of a barrel nut and the through-hole 46 may be provided in the form of a threaded shaft. If then, the beam portion 18 is provided in the form of a threaded bolt, a positive fit connection can be provided between the mounting member 45 and the mounting strut 11. In providing a threaded connection between the beam portion 18 and the through-hole 46, the mounting structure 8 can be adjustable in height direction Z in relation to the support structure 2 through the respective height adjustment H.

The mounting head 14 may be received in the support element 20 which may have a spherical and/or cylindrical shape. The support element 20 can be part of a coupling device 50 which may comprise spherical and/or cylindrical connectors and snap connectors (not shown) which may be received at a support base 51 of the coupling device 50 (cf. Figs. 13 to 16). In order to provide alternative load paths, in the present example, one side, the support structure 2, and particularly support element 20 and/or coupling device 50 can be held by the mounting head 14 which is provided by both, the mounting arms 14a, 14b of the mounting member 45 and the head portion 74 of the connecting member 70. The mounting arms 14a, 14b can support the head portion 74, in particular the lower arms 76 thereof, from below. On the other side, the mounting structure 8 can be connected to the mounting member 45 as well as to the connecting member 70, for example, in that an upper section of the mounting structure 8 directly engages the mounting member 45, while and a lower section of the mounting structure 8 engages the connecting member 70, in particular the outer circumference 73 of the shaft portion 72.

Thus, the attachment device 44 can be provided by both, the mounting member 45 and the connecting member 70. Therefore, the mounting member 45 and the connecting member 70 may complement each other. Consequently, in a respective fixation assembly 60, the mounting member 45 at least partly acts as a fixation element 61 for fixing the mounting structure 8 at the support structure 2, while the connecting member 70 at least partly acts as the redundancy element 62.

Fig. 17 shows a schematic cross-sectional side view of a further embodiment of a fixation arrangement 10 comprising a fixation assembly 60 for fixing a mounting structure 8 to a support structure 2. In the present example, the connecting member 70 is provided in two parts in that the shaft portion 72 is integrally formed with the at least one lower arm 76 providing a first part, while the at least one upper arm 75 is provided as a second part. Thereby, an upper section of the shaft portion 72 can provide the collar portion 63 of the redundancy element 62 which further extends along the gap 64 with the at least one lower arm 76 complementing the mounting arms 14a, 14b.

Fig. 18 shows a schematic cross-sectional side view of another embodiment of a fixation arrangement 10 comprising a fixation assembly 60 for fixing a mounting structure 8 to a support structure 2 and transferring operational loads K along a first load path. The present example, the mounting rod 11 can be integrally formed with the beam portion 18 engaging the mounting structure 8 and the mounting arms 14a, 14b. The first part load path can run through the redundancy element 62 providing the collar portion 63 engaging the mounting structure 8 and the at least one lower arm 76 engaging the coupling device 50, for example, by jutting below the support element 20 and bordering the gap 64, from below such that provides respective parts of the attachment device 44 transferring the operational loads K from the support element 20 to the mounting structure 8.

Fig. 19 shows a schematic cross-sectional side view of an embodiment of the fixation arrangement 10 shown in Fig. 18 transferring the operational loads K along a further load path. In the present example, the further load path can be provided by the fixation element 61 extending from the mounting arms 14a, 14b through the mounting rod 18 into the mounting structure 8. Consequently, with the attachment device 44 configured to provide a fixation assembly 60 comprising a fixation element 61 and the redundancy element 62, the mounting structure 8 and/or the support element 20 may be engaged by respective separated means each providing an independent path and thus redundant ways of transferring the operational loads K.

Fig. 20 shows a schematic front view of a fixation arrangement 10 comprising a further embodiment of a fixation assembly 60 in the mounted state M. Similarly to Figs. 6, 7, 10 and 11, the fixation arrangement 10 with the mounting strut 11 and the support strut 12 is shown in Fig. 20 in the joined position J and the fixation glove in a fixation position F. The receptacle portion 30 of the fixation glove 13 accommodates the mounting head 14. The gap 31 around the mounting head 14 is closed by the fixing section 34, the wedge sections 36, and the side walls 37 holding the mounting head 14 firmly in the mounted position J in the support slot 24.

In the present example, the fixation assembly 60 comprises the fixation element 61 in the form of the fixation glove 13 holding the mounting head 14 at the support element 20 as previously described. The redundancy element 62 is provided in the form of a collar portion 63 formed at the fixation glove. Fig. 7 shows a schematic perspective front view of the fixation arrangement 10 in the final or mounted state M with the fixation glove 13 and encompassing the neck portion 19 and/or the mounting strut 11 further downward. Here, the mounting strut 11 may further comprise further grooves 38. Locking elements 40, for example, in the form of locking springs 40, and/or locking noses may be provided to and/or formed at the collar portion 63 such that they can be held in the grooves 38 to prevent movements of the fixation glove 13 in a direction running opposite to the insertion direction I and hence, lock the fixation glove 13 in the fixation position F. Consequently, the fixation arrangement 10 is in the final or fully mounted state M.

Furthermore, as described above with reference to Fig. 7, the wedge sections 36 of the fixation glove 13 provide outer bearing surfaces 35b and inner support surfaces 35b as well for bearing the retention surface 26 of the support element 20 and supporting the holding surface 16 of the mounting head 14, respectively. The neck portion 19 of the mounting strut 11 juts through the opening 39 of the fixation glove 13. The receptacle portion 30, or at least front edges thereof, jut through the support slot 24 and beyond the mounting head 14 in the insertion direction I such that the locking elements 40 may be attached to the receptacle portion 34 retaining the fixation glove 13 in the mounted state M.

The peripheral gap 31 around the mounting head 14 may provide a certain clearance in the transverse direction Y and the height direction Z. A plateau 25a can be provided at the bearing surface 25 of the support element 20 within the support slot 24. It may help to add a certain elasticity to the fixation arrangement 10 in that in particular outer sections of the support surface 15 provided by the mounting arms 14a, 14b rest on the bearing surface 25 while a certain clearance remains between the support surface 15 and the bearing surface 25 in the region of the plateau 25a.

Two different load paths are provided in that on the one hand, the mounting strut 11 and/or neck portion 19 can transfer operational loads K between the mounting structure 8 and the support structure 2. Alternative, and/or additionally, the redundancy element 62, in particular the collar portion 63, can transfer operational loads K between the mounting structure 8 and the support structure 2. In the event of a failure in the region of the mounting strut 11 and/or neck portion 19, the redundancy element 62, in particular the collar portion 63, can transfer operational loads K between the mounting structure 8 and the support structure 2, or vice versa.

Fig. 21 shows a schematic cross-sectional side view of the fixation arrangement 10 in the mounted state M along a cross-sectional line C-C depicted in Fig. 20. Here it becomes apparent, that a certain thickness or tolerance d of the fixing section 34 measured in parallel to the height direction Z can provide for tolerance compensation by means of the fixation glove 13. For example, the thickness d may be varied such that different types of fixation gloves 13 with different thicknesses d can be used for closing different gaps 31 with varying sizes 31. Hence, the different thicknesses d help in adjusting variations in measurements of the support structure 2 to and the mounting structure 8, in particular if occurring in the longitudinal direction Z at the support struts 12 and the mounting strut 11, respectively.

Furthermore, it becomes apparent that the redundancy element 62, in particular the collar portion 63 can extend downwards along the support strut 11. The collar portion 63 may abut the support strut 11 in the insertion direction I. The back wall 32 of the support glove 32 may continue as a back wall of the collar portion 63. In other words, the collar portion 63 may be provided as an extension section of the fixation glove 13.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of Reference Signs

- 1: vehicle/ aircraft
- 2: support structure / fuselage
- 3: section
- 3a-e: first to fifth section
- 4: ground
- 5: landing gear
- 6: cover
- 7: interior space
- 8: mounting structure

- 10: fixation arrangement
- 11: mounting strut / mounting rod
- 12: support strut
- 13: fixation glove
- 14: mounting head
- 14a: mounting arm
- 14b: mounting arm
- 15: support surface
- 16: holding surface
- 17: lateral surface
- 18: beam portion
- 19: neck portion

- 20: support element
- 24: support slot
- 24a: supporting arm
- 24b: supporting arm
- 25: bearing surface
- 25a: plateau
- 26: retention surface
- 27: lateral surface
- 28: support pole
- 29: notch

- 30: receptacle portion
- 31: gap / free space
- 32: back wall
- 33: cavity
- 34: fixing section
- 35a: outer bearing surface
- 35b: inner support surface
- 36: wedge section
- 37: side wall
- 38: groove
- 39: opening

- 40: locking element

- 41: mounting base
- 42: mounting section
- 44: attachment device
- 45: mounting member
- 46: through-hole

- 50: coupling device / ball joint
- 51: support base
- 52: bearing seat
- 56: through-hole

- 60: fixation assembly
- 61: fixation element
- 62: redundancy element
- 63: collar portion / extension section
- 64: gap

- 70: connecting member
- 71: through-hole
- 72: shaft portion
- 73: outer circumference
- 74: head portion
- 75: upper arm
- 76: lower arm

- d: thickness/ tolerance

- F: fixation position
- H: height adjustment
- I: insertion direction
- J: joined position
- K: operational load
- L: Locking position
- M: mounted state
- T: travel direction
- X: longitudinal direction
- Y: transverse direction
- Z: height direction

### ASPECTS

1. Fixation glove (13) for fixing a mounting structure (8) to a support structure (2) of a vehicle (1), in particular a fuselage of an aircraft, the fixation glove (13) having an arch-shaped fixing section (34) bordering a receptacle portion (30) for receiving a mounting head (14) of a mounting strut (11) to bear the mounting head (14) while wedging it within a support slot (24) of a support element (20) of the support structure (2).
2. Fixation glove (13) according to aspect 1, wherein the fixing section (34) is arch-shaped in a projection along an insertion direction (I) for inserting the fixation glove (13) into a free space formed between the mounting head (14) and the support slot (24).
3. Fixation glove (13) according to aspect 1 or 2, wherein the fixing section (34) provides an at least partially upward concave shaped outer bearing surface (35a).
4. Fixation glove (13) according to at least one of aspects 1 to 3, wherein the receptacle portion (30) is bordered by at least one wedge section (36) opposing the fixing section (34) with respect to a receiving space provided by the receptacle portion (30) for receiving the mounting head (14).
5. Fixation glove (13) according aspect 4, wherein the receptacle portion (30) comprises two wedge sections (36) opposing the fixing section (34) with respect to a receiving space and providing a notch (29) between them for receiving a neck portion (19) of the mounting strut (11) holding the mounting head (14).
6. Fixation glove (13) according aspect 4 or 5, wherein the fixing section (34) and at least one wedge section (36) are extending essentially in parallel to each other with a common curvature.
7. Fixation glove (13) according to at least one of aspects 1 to 6, further having side walls (37) extending essentially perpendicularly away from the fixing section (34) and laterally bordering the receptacle portion (30).
8. Fixation glove (13) according to aspect 7, wherein the side walls (37) provide at least partially laterally outward convex shaped side faces.
9. Fixation glove (13) according to at least one of aspects 1 to 6 and/or 7 or 8, wherein the fixing section (34) and/or the side walls (37) are provided with at least one groove (38) for receiving a locking element (40) for locking-up the mounting head (14) within the receptacle portion (30).
10. Fixation glove (13) according to at least one of aspects 1 to 9, wherein the receptacle portion (30) provides a cavity (33) for receiving the mounting head (14).
11. Fixation arrangement (10) for fixing a mounting structure (8) at a support structure (2) of a vehicle (1), in particular a fuselage of an aircraft, comprising a fixation glove (13) according to at least one of aspects 1 to 10.
12. Fixation arrangement (10) according to aspect 11, further comprising a mounting strut (11) with a mounting head (14) having a supporting surface (15) shaped complementary at least to an inner bearing surface (35b) of the arch-shaped fixing section (34) of the fixation glove (13).
13. Fixation arrangement (10) according to aspect 11 or 12, further comprising a support strut (12) with a support element (20) having a support slot (24) shaped complementary at least to an outer bearing surface (35a) of the arch-shaped fixing section (34) of the fixation glove (13).
14. Vehicle (1), in particular an aircraft, with a support structure (2) comprising a fixation arrangement according to at least one of the aspects 11 to 13.
15. Method for fixing a mounting structure (8) to a support structure (2), in particular for a vehicle (1), such as a fuselage of an aircraft, wherein a mounting head (14) of a mounting strut (11) of the mounting structure (8) is being inserted into a support slot (24) of a support element (20) of the support structure (2) in an insertion direction (I), and wherein a peripheral gap (31) around the mounting head (14) is being at least partially closed by inserting a fixation glove (13) having an arch-shaped fixing section (34) bordering a receptacle portion (30) for receiving the mounting head (14) in and/or against the insertion direction (I), while the fixing section (34) bears the mounting head (14) while wedging it within the support slot (24).

## Claims

1. Fixation assembly (60) for fixing a mounting structure (8) to a support structure (2) of a vehicle (1), in particular a fuselage of an aircraft, comprising
at least one fixation element (61) adapted for transferring operational loads (K) of the mounting structure (8) into the support structure (2), and
at least one redundancy element (62) configured to transfer the operational loads (K) alternatively and/or additionally to the at least one fixation element (61).

2. Fixation assembly (60) according to claim 1, wherein the at least one redundancy element (62) is adapted to take up the operational loads (K) independently of the at least one fixation element (61).

3. Fixation assembly (60) according to claim 1 or 2, wherein the operational loads (K) include static loads and dynamic loads.

4. Fixation assembly (60) according to at least one of claims 1 to 3, wherein the operational loads (K) at least correspond to a limit load, preferably to an ultimate load, to be expected during operation of the vehicle (1).

5. Fixation assembly (60) according to at least one of claims 1 to 4, wherein the at least one redundancy element (62) complements the at least one fixation element (61).

6. Fixation assembly (60) according to at least one of claims 1 to 5, wherein the at least one fixation element (61) and the respective at least one redundancy element (62) at least sectionwise encompass and/or encapsulate each other.

7. Fixation assembly (60) according to at least one of claims 1 to 6, wherein the wherein the at least one redundancy element (62) has a collar portion (63) at least sectionwise surrounding the at least one fixation element (61).

8. Fixation assembly (60) according to at least one of claims 1 to 7, wherein the at least one redundancy element (62) is configured to at least sectionwise receive the at least one fixation element (61) and/or the mounting structure (8).

9. Fixation assembly (60) according to at least one of claims 1 to 8, wherein a gap (31, 64) between the fixation element (61) and the redundancy element (62) is formed for receiving the mounting structure (8).

10. Fixation assembly (60) according to at least one of claims 1 to 9, wherein the fixation element (61) and the redundancy element (62) together form at least part of a rotary joint.

11. Fixation assembly (60) according to at least one of claims 1 to 10, wherein the at least one fixation element (61) is provided in the form of a fixation glove (13) having an arch-shaped fixing section (34) bordering a receptacle portion (30) for receiving a mounting head (14) of a mounting strut (11) of the mounting structure (8) to bear the mounting head (14) while wedging it within a support slot (24) of a support element (20) of the support structure (2).

12. Fixation assembly (60) according to claim 11, wherein the redundancy element (62) is provided in the form of an extension section of the fixation glove (13) configured for receiving a neck portion (19) of the mounting strut (11) holding the mounting head (14).

13. Fixation assembly (60) according to claim 12, wherein the extension section and/or the neck portion (19) are or is, respectively, provided with at least one groove (38) for receiving a locking element (40) for locking the fixation element (61) and/or the extension section, respectively, at the mounting strut (11).

14. Fixation arrangement (10) for fixing a mounting structure (8) at a support structure (2) of a vehicle (1), in particular a fuselage of an aircraft, comprising at least one Fixation assembly (60) according to at least one of claims 1 to 13.

15. Vehicle (1), in particular an aircraft, with a support structure (2) comprising a fixation arrangement (10) according to claim 14.
